# EUROPÄISCHE PATENTSCHRIFT

(11) **EP 2 062 674 B1**
(45) Veröffentlichungstag und Bekanntmachung des Hinweises auf die Patenterteilung: **02.11.2016**
(21) Anmeldenummer: 07022462.1
(22) Anmeldetag: 20.11.2007
(51) Int. Cl.: B23K 26/04

(54) **Verfahren zum Vorbereiten und zum Durchführen eines Laserschweissprozesses**
Method for preparing and carrying out a laser welding process
Procédé de préparation et de réalisation d'un processus de soudure laser

(43) Veröffentlichungstag der Anmeldung: 27.05.2009
(73) Patentinhaber: TRUMPF Werkzeugmaschinen GmbH + Co. KG, 71254 Ditzingen (DE)
(72) Erfinder: Hesse, Tim, 71254 Ditzingen (DE); Pfitzner, Dieter, 71263 Weil der Stadt (DE); Magg, Winfried, 71254 Ditzingen (DE)
(74) Vertreter: Kohler Schmid Möbus Patentanwälte

(56) Entgegenhaltungen:
- EP-A- 0 262 363
- EP-A- 1 219 380
- EP-B- 0 770 445
- JP-A- 9 267 186
- JP-A- 2000 263 266
- US-A- 5 001 324

## Beschreibung

Die vorliegende Erfindung betrifft ein Verfahren gemäß dem Oberbegriff des Anspruchs 1, zum Vorbereiten eines Laserschweißprozesses an einem Werkstück. Die Erfindung betrifft weiterhin ein Verfahren zum Durchführen eines Laserschweißprozesses an einem Werkstück, umfassend die Schritte: Erfassen der Position einer Fügestelle in einem ersten Messbereich vor einer Laserstrahlposition an dem Werkstück, Erfassen der Laserstahlposition in einem zweiten Messbereich, Bestimmen einer optimalen Schweißposition durch Überlagerung der Messwerte der Laserstrahlposition und der Position der Fügestelle, sowie Verbringen eines Laserbearbeitungskopfs an die optimale Schweißposition.

Beim Laserstrahlschweißen ist die exakte Ausrichtung des Laserstrahls zum Fügespalt bzw. zur Fügestelle von entscheidender Bedeutung für die Qualität der während des Schweißprozesses gebildeten Schweißnaht. Insbesondere beim Schweißen von unterschiedlichen Werkstoffen wie Stahl mit Stahlguss im Stumpfstoß muss der Laserstrahl aus metallurgischen Gründen auf wenige hundertstel Millimeter genau im Bereich der Fügestelle positioniert werden. Es ist bekannt, hierzu während des Schweißprozesses optische Nahtfolgesensoren einzusetzen, welche die Position der Fügestelle vor der Schweißstelle ermitteln, um Toleranzen des Werkstücks und der Spannvorrichtung ausgleichen zu können.

Das Einrichten eines Nahtfolgesensors erfolgt bisher überwiegend manuell, indem beispielsweise der Laserstrahl mit geringer Laserleistung einen Testpunkt oder eine linienförmige Gravur auf einem Testwerkstück erzeugt und der systematische Versatz des Nahtfolgesensors anhand der Abweichung zwischen Testpunkt bzw. Gravur und Fügestelle nachfolgend manuell gemessen wird. Das ermittelte Versatzmaß wird bei der Kalibrierung des Sensors berücksichtigt. Der Testpunkt oder die Gravur werden mit geringer Laserleistung erzeugt, daher kann beim Schweißen mit höherer Leistung ein Strahlversatz auftreten. Eine weitere Möglichkeit für die Justage des Nahtfolgesensors ist die zerstörende Prüfung der geschweißten Bauteile. Durch Auswerten eines Schliffbilds der Schweißnaht wird die Nahtlage beurteilt und der Sensor-Offset kann entsprechend nachjustiert werden. Beide Verfahren sind allerdings sehr zeitintensiv und nicht sehr genau. Die realisierbare Genauigkeit hängt von der Tagesform des Maschinenbedieners und den verfügbaren Messmitteln ab.

Weiterhin können herkömmliche Nahtfolgesensoren laterale Verschiebungen der Fügestelle nach dem Sensor, die beispielsweise durch Torsion des Werkstücks hervorgerufen werden, sowie laterale Driftbewegungen des Laserstrahls während der Laserbearbeitung nicht erfassen. Driftbewegungen des Laserstrahls, die sich beispielsweise durch thermisch bedingte Veränderungen oder Verschmutzung der optischen Komponenten im Strahlengang ergeben, führen in diesem Fall zu einer Fehlpositionierung der Schweißnaht. Solche Fehlpositionierungen müssen bei Anwendungen mit hoher Anforderung an die Nahtlage, wie z.B. beim oben erwähnten Schweißen von Stahl mit Guss, ausgeschlossen werden.

Aus der JP 09267186 A ist es bekannt, beim Laserstrahlschweißen eines Rohres zusätzlich zu einem kamerabasierten Nahtfolgesensor zum Erfassen der Position des Fügespalts vor einer Schweißstelle, die dem Laserstrahlfokus entspricht, einen zweiten Sensor in unmittelbarer Nähe zur Schweißstelle einzusetzen, um eine durch die Torsion des Werkstücks bzw. des Fügespalts bedingte Fehlpositionierung zu erkennen. Zu diesem Zweck erfasst der zusätzliche Sensor die Temperaturverteilung in der Umgebung der Schweißstelle. Durch Vergleichen der von den beiden Sensoren ermittelten Ortskoordinaten des Fügespalts bzw. der Schweißstelle wird ein Korrekturwert bestimmt, der bei der Regelung einer Stellachse eines den Laserstrahl führenden Laserschweißkopfes zur ermittelten optimalen Schweißposition hinzuaddiert wird, um die Genauigkeit bei der Schweißung zu erhöhen. Bei diesem Verfahren wird jedoch die tatsächliche Schweißposition nur indirekt ermittelt und durch die Verwendung von zwei unabhängigen Sensoren, die eine Lagetoleranz zueinander aufweisen, verringert sich außerdem die Genauigkeit des Verfahrens.

Aus der EP 0 770 445 B1 sind ein Verfahren und eine Vorrichtung zum Kontrollieren und Positionieren eines Laserstrahls beim Bearbeiten von Werkstücken bekannt geworden, bei denen ein erster Sensor im Vorlauf zum Laserstrahlfokus einen vom Laserstrahl nachzufahrenden Weg bestimmt und ein zweiter Sensor im Nachlauf zur Laserstrahlfokus die Tätigkeit des Laserstrahls kontrolliert. Die mittels des ersten Sensors bestimmte Soll-Lage des Laserstrahls wird mit der mittels des zweiten Sensors ermittelten Ist-Lage des Laserstrahls unter Berücksichtigung der geschwindigkeitsabhängigen relativen Verschiebung Strahl/Werkstück verglichen und bei einer Abweichung der Ist- von der Soll-Lage wird die Lage des Laserstrahls an eine optimale Schweißposition verbracht.

Die JP 2000263266 A beschreibt eine Vorrichtung zum präzisen Bestimmen der Position eines Laserstrahls bzw. eines von diesem erzeugten Schmelzbades sowie einer Fügestelle während eines Schweißprozesses. Zum Bestimmen der Position des Laserstrahls wird vom Werkstück ausgehende Plamsastrahlung mit einer Kamera aufgenommen. Zum Bestimmen der Position der Fügestelle wird Licht von einem Projektor auf die Schweißstelle eingestrahlt und nachfolgend der vom Werkstück reflektierte Lichtanteil mit derselben Kamera gemessen. Die Regelung des Laserbearbeitungskopfs während des Schweißprozesses erfolgt dann in Abhängigkeit von der Position der Fügestelle und der Position des Laserstrahls.

In der EP 0262363A2 sind eine Vorrichtung und ein Verfahren gemäß dem Oberbegriff des Anspruchs 1, zum Durchführen eines Laserschweißprozesses für die Herstellung rohrförmiger Körper aus einem Stahlband beschrieben, bei dem zur Regelung des Schweißprozesses unterschiedliche Sensoren verwendet werden: Mit Hilfe eines kamerabasierten Nahtverfolgungssystems vor der Schweißstelle erfolgt eine Steuerung der lateralen Position des Fokuspunktes in der Ebene des Schweißspaltes. Mit Hilfe eines weiteren kamerabasierten Sensors zur Lichtschnittmessung werden der Versatz der Bandkanten des Stahlbands sowie die Schweißspaltbreite gemessen. Zur Regelung der nach dem Schweißen der Bankanten erfolgenden Stauchung der Schweißnaht mit Hilfe von zwei Schweißrollen wird die Stauchwulstbreite auf der Innen- und Außenseite der Schweißnaht nachlaufend zur Laserstrahlposition gemessen.

### Aufgabe der Erfindung

Es ist die Aufgabe der vorliegenden Erfindung, Verfahren zur Vorbereitung und zur Durchführung eines Laserschweißprozesses bereitzustellen, welche eine hochgenaue Nahtlageregelung insbesondere auch unter Kompensation von Driftbewegungen des Laserstrahls in der Bearbeitungsoptik erlauben.

### Gegenstand der Erfindung

Diese Aufgabe wird erfindungsgemäß gelöst durch ein Verfahren der eingangs genannten Art zum Vorbereiten eines Laserschweißprozesses, umfassend die Schritte: Erfassen der Position einer Fügestelle an dem Werkstück in einem ersten Messbereich vorlaufend zu einer Laserstrahlposition mit Hilfe einer Sensoreinrichtung, Erfassen der Position der Fügestelle in einem zweiten Messbereich an der Laserstrahlposition und/oder in einem dritten Messbereich nachlaufend zur Laser-strahlposition mit der Sensoreinrichtung, Erfassen der Laserstrahlposition in dem zweiten Messbereich mit der Sensoreinrichtung, sowie Vergleichen der Positionen der Fügestelle in den jeweiligen Messbereichen zum Anpassen der Lage und/oder der Ausrichtung und/oder des Koordinatensystems der Sensoreinrichtung und/oder eines Laserbearbeitungskopfs relativ zum Werkstück, wobei zum Erfassen der Laserstrahlposition mit dem Laserstrahl ein Testpunkt auf dem Werkstück erzeugt wird und das Koordinatensystem der Sensoreinrichtung an die so erfasste Laserstrahlposition angepasst wird, bis die Laserstrahlposition sich an einer Sollposition befindet. Das Anpassen des Koordinatensystems kann beispielsweise auf rechnerischem Wege in einer Auswerteeinheit. Ein solches Verfahren ist im Anspruch 1 beansprucht.

Erfindungsgemäß wird vorgeschlagen, die Position der Fügestelle, insbesondere eines Fügespalts, nicht nur wie im Stand der Technik üblich im Vorlauf zur der Laserstrahlposition zu erfassen, die beim Schweißprozess der Schweißstelle entspricht, sondern auch an der und/oder nachlaufend zur Laserstrahlposition. Da eine Lageerfassung der Fügestelle während des Schweißprozesses aufgrund des hierbei auftretenden Prozesslichts im Bereich der Schweißstelle nicht oder nur unzureichend möglich ist und nachlaufend zur Schweißstelle nur noch die beim Schweißen gebildete Schweißnaht detektiert werden kann, ist es erforderlich, zum Ausrichten von Laserbearbeitungskopf und Sensoreinrichtung die Ermittlung der Position der Fügestelle an bzw. nachlaufend zur Laserstrahlposition vor dem eigentlichen Schweißprozess durchzuführen.

Durch Vergleichen der Positionen der Fügestelle in den jeweiligen Messbereichen und durch Ermitteln der Laserstrahlposition relativ zur Fügestelle kann eine exakte Ausrichtung bzw. Positionierung des Laserstrahls relativ zur Fügestelle sichergestellt werden. Zusätzlich wird auch die Lage des Koordinatensystems der für das Erfassen eingesetzten Sensoreinrichtung an die Geometrie des Werkstücks bzw. der Fügestelle angepasst.

Die Laserstrahlposition und die Position der Fügestelle in den jeweiligen Messbereichen wird vorzugsweise mit Hilfe einer an dem Laserbearbeitungskopf angebrachten programmierbaren Kamera, beispielsweise einer CMOS-Kamera, ermittelt, welche die Erfassung von drei separaten Messbereichen auf einem einzigen Kamera-Chip ermöglicht: Einen ersten Messbereich (Pre-Prozess-Messfenster), in dem vorlaufend zum Laserstrahl bzw. zur Schweißstelle die (laterale) Position der Fügestelle detektiert wird, einen zweiten Messbereich (In-Prozess-Messfenster), in dem während des Laserschweißprozesses die Position des Laserstrahlfokus auf der Werkstückoberfläche detektiert wird und ggf. vor dem Laserschweißprozess zusätzlich die (laterale) Position der Fügestelle erfasst wird, sowie einen dritten Messbereich (Post-Prozess-Messfenster), in dem vorbereitend zum Laserschweißprozess die Position der Fügestelle nachlaufend zum Laserstrahl und während des Laserschweißprozesses Kennwerte der Schweißnahtoberraupe detektiert werden, beispielsweise Überwölbung oder Unterwölbung und Nahtbreite. Zusätzlich kann mittels der drei Messbereiche auch der Abstand des Laserbearbeitungskopfs von der Oberfläche des Werkstücks ermittelt werden, wie weiter unten dargestellt wird.

Bei einer vorteilhaften Variante werden während des Erfassens der Position der Fügestelle der Laserbearbeitungskopf und das Werkstück relativ zueinander entlang der Fügestelle bewegt. In diesem Fall kann die zu schweißende Bahn zur Kalibration einmal vollständig nachgefahren werden, wobei die Fügestelle im Vorlauf zur Laserstrahlposition bzw. zur späteren Schweißstelle erfasst und der Laserbearbeitungskopf und/oder die darin angeordnete Bearbeitungsoptik entsprechend der gemessenen Position der Fügestelle vorlaufverzögert nachgeregelt wird/werden. Zusätzlich wird die Fügestelle an der Laserstrahlposition erfasst, und es wird ermittelt, ob Abweichungen von einer Sollposition der Fügestelle auftreten. Dies ist günstig, um Bahnfehler während des Laserschweißprozesses auszugleichen, welche beim Führen des Laserschweißkopfs z.B. mittels eines Roboterarms entlang der Fügenaht beispielsweise aufgrund von Getriebefehlern der Roboter-Bewegungsachsen auftreten können. Hierzu werden die beim Nachfahren der Bahn vor dem Schweißprozess ermittelten Abweichungen gespeichert und während des Laserschweißprozesses zur Kompensation von Bahnfehlern verwendet. Dies ist möglich, da der Roboterarm beim Wiederholen der Bewegung entlang der zu schweißenden Bahn immer die gleichen Abweichungen erzeugt. Auch kann durch das Nachfahren der zu schweißenden Bahn eine Anpassung der Messbereiche der Sensoreinrichtung an die Lage der Fügestelle erreicht werden, wie weiter unten näher ausgeführt ist.

Bei einer bevorzugten Variante wird die Position der Fügestelle im jeweiligen Messbereich mit Hilfe von Messlicht, insbesondere durch ein Lichtschnitt-Verfahren mit mindestens einer Lichtlinie erfasst. Beim so genannten Lichtschnittverfahren wird in den jeweiligen Messbereich eine oder eine Mehrzahl von parallelen Lichtlinien in einem Winkel auf das Werkstück projiziert, welche mittels der Kamera erfasst werden kann/können, wobei diese Linie(n) im Wesentlichen quer der Fügestelle verlaufen. Im Bereich der Fügestelle wird daher die Linie unterbrochen oder es finden Versetzungen statt, die von der Kamera bzw. einer mit dieser in Verbindung stehenden Auswerteeinrichtung erkannt werden, so dass die Position der Fügestelle erfasst werden kann.

Alternativ kann die Position der Fügestelle mit Hilfe des Auflichtverfahrens erfasst werden, da bestimmte Fügestoßgeometrien wie z.B. ein Stumpfstoß ohne Kantenversatz durch das Lichtschnittverfahren nicht erfasst werden können. Beim Auflichtverfahren wird die Werkstückoberfläche von oben flächig beleuchtet. An der Fügestelle entsteht ein Helligkeitseinbruch, der von der Kamera bzw. einer mit dieser in Verbindung stehenden Auswerteeinrichtung erkannt wird, so dass die laterale Position der Fügestelle erfasst werden kann. Das Auflicht- und das Lichtschnittverfahren können auch kombiniert angewendet werden. Beispielsweise kann alternierend die laterale Position der Fügestelle mit dem Auflichtverfahren und der Abstand zwischen Schweißoptik und Werkstückoberfläche mit dem Lichtschnitt-Bei einer bevorzugten Weiterbildung wird in einem vorausgehenden Verfahrensschritt die Ausrichtung des Laserbearbeitungskopfs zum Werkstück anhand der Ausrichtung der Lichtlinien in den Messbereichen ermittelt und bevorzugt eine parallele Ausrichtung der Lichtlinien in den Messbereichen eingestellt. Eine nicht vorhandene Parallelität zwischen den Lichtlinien zweier Messbereiche zeigt eine Abweichung von der senkrechten Ausrichtung des Laserbearbeitungskopfes zur Werkstückoberfläche an, die durch eine Schwenkbewegung der Schweißoptik um den TCP (Tool-Center-Point) des Laserwerkzeugs ausjustiert werden kann.

Bei einer vorteilhaften Weiterbildung wird in dem vorausgehenden Verfahrensschritt der Abstand des Laserbearbeitungskopfs vom Werkstück anhand der Position von zwei parallel ausgerichteten Lichtlinien in den Messbereichen bestimmt und bevorzugt auf einen Soll-Abstand eingestellt. Hierzu kann z.B. der Laserbearbeitungskopf in einer Richtung senkrecht zum Werkstück bewegt werden, bis die Lichtlinien in beiden Messbereichen mittig liegen, was definitionsgemäß den richtigen Arbeitsabstand des Laserbearbeitungskopfs zur Werkstückoberfläche anzeigt.

Bei einer bevorzugten Variante wird das Koordinatensystem der Sensoreinrichtung an die ermittelte Laserstrahlposition angepasst, indem entweder die Sensoreinrichtung oder die Messbereiche verschoben, insbesondere parallel verschoben werden, bis der Testpunkt und damit die Laserstrahlposition sich an der Sollposition, insbesondere mittig im zweiten Messbereich, befindet. Zum Erzeugen des Testpunkts wird der Laserstrahl kurz gezündet und die dabei auftretende Leuchterscheinung im zweiten Messbereich erfasst, die der Position der Laserfokusfläche auf dem Werkstück entspricht. Daraufhin werden alle Messbereiche parallel so weit in einer Richtung auf dem Kamerachip verschoben, bis der Laserstrahl mittig im zweiten Messbereich liegt. Ein solcher Kalibrationsschritt verhindert, dass konstant neben der im ersten Messbereich detektierten Fügestelle geschweißt wird.

Bei einer besonders vorteilhaften Variante werden zum Anpassen des Sensor-Koordinatensystems an den Verlauf der Fügestelle die Messbereiche relativ zueinander und bevorzugt punktsymmetrisch zur Laserstrahlposition verschoben, bis die Fügestelle mittig in den jeweiligen Messbereichen positioniert ist. In diesem Kalibrationsschritt wird geprüft, ob die detektierte Position der Fügestelle mittig in den Messbereichen liegt. Falls das nicht der Fall ist, kann der Laserbearbeitungskopf um eine senkrecht zum Werkstück verlaufende Achse gedreht werden, um die mittige Positionierung zu erreichen. Eine abschließende, hochgenaue Anpassung wird dann durch Verschieben der Messbereiche auf dem Kamera-Chip erreicht, da Abweichungen im Bereich von ca. 1/100 mm einfacher durch Anpassen der Sensorik zu kompensieren sind als durch Ausrichten des Laserbearbeitungskopfs. Hierbei wird somit das Mess-Koordinatensystem an die Werkstückgeometrie angepasst.

Ein weiterer Aspekt der Erfindung ist verwirklicht in einem Verfahren der eingangs genannten Art zum Durchführen eines Laserschweißprozesses an einem Werkstück, bei dem zur Vorbereitung ein Verfahren wie oben beschrieben ausgeführt wird. Erst durch die Vorbereitung des Laserschweißprozesses auf die oben beschriebene Art ist eine hochgenaue Nahtlageregelung sichergestellt und es können insbesondere Driftbewegungen des Laserstrahls in der Bearbeitungsoptik ausgeglichen werden.

Bei einer besonders vorteilhaften Variante des Verfahrens wird der Laserbearbeitungskopf während des Laserschweißprozesses mittels einer Führungseinrichtung, insbesondere eines Roboterarms oder eines kartesisch aufgebauten Handhabungssystems, entlang der Fügestelle bewegt. Eine während der Vorbereitung des Laserschweißprozesses ermittelte Abweichung der Position der Fügestelle im zweiten Messbereich von der Sollposition in diesem Messbereich wird zur Kompensation eines Bahnfehlers der Führungseinrichtung beim Bestimmen der optimalen Schweißposition berücksichtigt. Beim Roboterschweißen, bei dem der Laserbearbeitungskopf an einem Roboter oder einem anderen kartesisch aufgebauten Handhabungssystem angebracht ist und von diesem entlang der Fügestelle bewegt wird, ist es üblich, den Verlauf der zu schweißenden Bahn in einer Steuerungseinrichtung zu hinterlegen. Zusätzlich wird der Laserbearbeitungskopf an bestimmten Stellen des Werkstücks über der Fügestelle, senkrecht dazu und im richtigen Abstand positioniert und diese Positionen werden ebenfalls in der Steuerungseinheit des Roboters hinterlegt (geteacht), um so den vorgegebenen Bahnverlauf mit dem tatsächlichen Werkstück in Übereinstimmung zu bringen. Während des Schweißprozesses fährt der Roboter die "geteachte" Bahn ab, während der Nahtlagesensor die genaue Position der Fügestelle erfasst und die Position des Laserbearbeitungskopfs über eine mit diesem verbundene Stellachse nachregelt. Die tatsächliche Bahnbewegung des Roboters folgt jedoch z.B. aufgrund von Getriebefehlern der Roboter-Bewegungsachsen nicht absolut der vorgegebenen Bahn, sondern es treten Toleranzen im Bereich einiger 1/100 mm auf.

Um diese Fehler auszuregeln, wird nach der Kalibration des Messsystems wie oben beschrieben die zu schweißende Bahn einmal vollständig abgefahren, die Position der Fügestelle im ersten Messbereich über einen Lichtschnitt erfasst und und die Stellachse des Bearbeitungskopfs und/oder der darin angeordneten Bearbeitungsoptik entsprechend der gemessenen Position vorlaufverzögert nachgeregelt. Im zweiten Messbereich wird über einen zweiten Lichtschnitt an der tatsächlichen späteren Schweißstelle, d.h. am Laserauftreffpunkt, die Position der Fügestelle überprüft. Die dabei ermittelten Abweichungen werden gespeichert und dienen beim anschließenden Schweißprozess zur Kompensation des durch den Roboter verursachten Bahnfehlers. Dies ist möglich, da der Roboter beim Wiederholen der Bewegung immer die gleichen Abweichungen von der "geteachten" Bahn aufweist.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Laserbearbeitungskopfs mit einer an diesem angebrachten Sensoreinrichtung mit Kamera,
- Fign. 2a,b: eine schematische Darstellung von drei aufeinander folgenden Messbereichen der Sensoreinrichtung mit zwei unter einem Winkel zueinander ausgerichteten Lichtlinien (Fig. 2a) und mit zwei parallel ausgerichteten Lichtlinien (Fig. 2b),
- Fign. 3a,b: eine schematische Darstellung der drei Messbereiche mit einer außermittig angeordneten Fokusfläche (Fig. 3a), die durch paralleles Verschieben aller Messbereiche in eine mittige Position im zweiten Messbereich verbracht wird (Fig. 3b),
- Fign. 4a,b: eine analoge Darstellung mit einem im ersten und dritten Messbereich außermittig angeordneten Fügestelle (Fig. 4a), die durch Verschieben der beiden Messbereiche in eine mittige Position verbracht wird (Fig. 4b),
- Fig. 5: eine schematische Darstellung eines rotationssymmetrischen Werkstücks bei einem Laserschweißprozess mit einer Fehlpositionierung in axialer Richtung,
- Fig. 6: eine schematische Darstellung der drei Messbereiche beim Nachfahren der Fügestelle zum Erfassen von Bahnfehlern mittels zweier Lichtlinien,
- Fign. 7a-c: eine Nahtlageregelung beim Laserschweißen ohne Driftbewegung des Laserstrahls (Fig. 7a), mit Driftbewegung des Laserstrahls und ohne Driftkompensation (Fig. 7b) bzw. mit Driftkompensation (Fig. 7c),
- Fig. 8: ein Blockschaltbild einer Regeleinrichtung zur Regelung des Schweißprozesses der Fign. 7a,c.

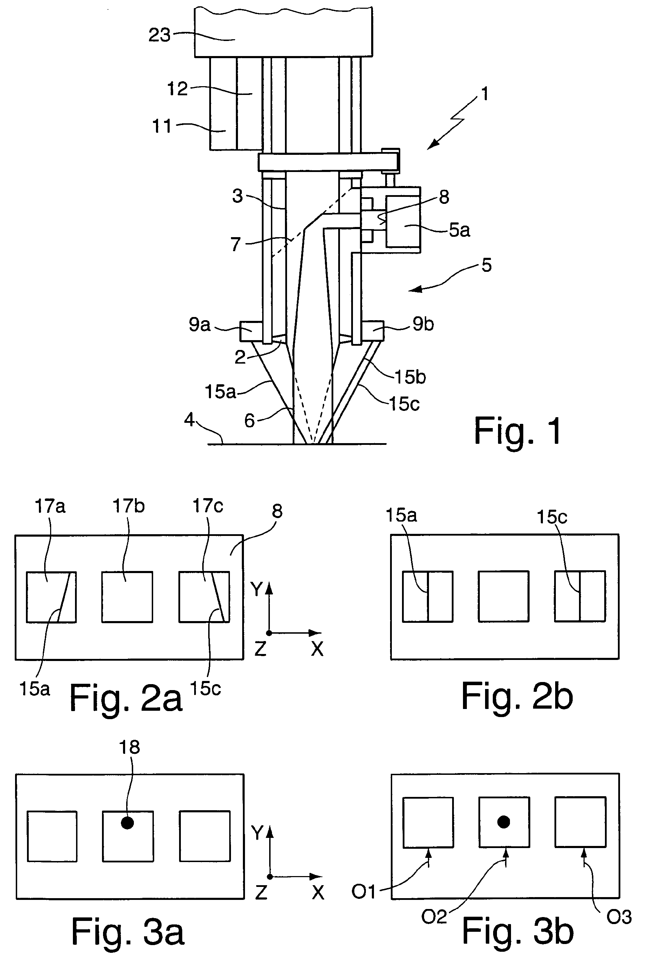

**Fig. 1** zeigt einen Laserbearbeitungskopf **1** mit einer Fokussierlinse **2,** welche einen dem Laserbearbeitungskopf 1 zugeführten Laserstrahl **3** auf eine (nicht gezeigte) Fokusfläche auf einem Werkstück **4** fokussiert, um dort ein Laserschweißung durchzuführen. Zur Überwachung eines Schweißbereichs auf dem Werkstück 4 ist an dem Laserbearbeitungskopf 1 eine Sensoreinrichtung **5** mit einer CMOS-Kamera **5a** angebracht.

Der Strahlengang **6** der CMOS-Kamera 5a wird an einem teildurchlässigen Umlenkspiegel **7** gefaltet, und auf eine Sensorfläche **8** der CMOS-Kamera 5a wird nicht nur die Fokusfläche des Laserstrahls 3 selbst, sondern einen größerer Ausschnitt des Werkstücks 4 in der Umgebung des Laserstrahls 3 abgebildet. Weiterhin sind zwei der Sensoreinheit 5 zugeordnete Linienprojektoren **9a, 9b** vorgesehen, welche drei Laserlichtlinien **15a** bis **15c** in den von der CMOS-Kamera 5a überwachten Strahlengang 6 projizieren. In Abhängigkeit von den durch die CMOS-Kamera 5a erfassten Daten kann der Laserbearbeitungskopf 1 entlang einer als Linearachse ausgebildeten ersten Stellachse **11** verschoben werden, um den Laserstrahl 3 an seine optimale Schweißposition zu verbringen, wie weiter unten im Einzelnen beschrieben ist. Über eine zweite Stellachse **12** kann zusätzlich der Abstand zwischen dem Laserbearbeitungskopf 1 und dem Werkstück 4 variiert werden.

An der Sensorfläche 8 der CMOS-Kamera 5a sind, wie in **Fig. 2a** gezeigt, drei Messbereiche **17a** bis **17c** gebildet, die zunächst in einer Linie entlang einer ersten Richtung (**X**-Richtung) hintereinander angeordnet sind. Der erste Messbereich 17a (Pre-Messfenster) erfasst während des Schweißprozesses einen Ausschnitt des Werkstücks 4 vorlaufend zum Laserstrahl 3, der zweite Messbereich 17b (In-Messfenster) den unmittelbaren Bereich der Schweißung mit der Fokusfläche des Laserstrahls 3, und der dritte Messbereich 17c (Post-Messfenster) einen Ausschnitt des Werkstücks 4 nachlaufend zur Schweißung. Die drei Messbereiche 17a bis 17c entsprechen den Bereichen, in denen die Intensität des auf die Sensorfläche 8 eingestrahlten Lichts mittels einer Auswerteeinrichtung (nicht gezeigt) ausgewertet wird. Es versteht sich, dass neben der gezeigten quadratischen Form für die Messbereiche 17a bis 17c auch andere, z.B. rechteckige Formen gewählt werden können.

Die Sensoreinrichtung 5, welche die Kamera 5a, die Auswerteeinrichtung sowie die Linienprojektoren 9a, 9b umfasst, wird vor dem Schweißprozess automatisch kalibriert, indem die von den drei Messbereichen 17a bis 17c erfassten Messgrößen kombiniert ausgewertet werden.

Hierzu wird in einem ersten Schritt die Ausrichtung des Laserbearbeitungskopfs 1 und dessen Abstand zum Werkstück 4 eingestellt. Wie in **Fig. 2a** gezeigt, wird hierzu zunächst im ersten und dritten Messbereich 17a, 17c die erste bzw. dritte Lichtline 15a, 15c der Linienprojektoren 9a, 9b detektiert. Sind wie in Fig. 2a gezeigt die beiden Lichtlinien 15a, 15c nicht parallel zueinander ausgerichtet, deutet dies auf eine Abweichung von der senkrechten Ausrichtung des Laserbearbeitungskopfs 1 zur Werkstückoberfläche hin. Diese fehlerhafte Ausrichtung wird durch eine Winkeljustage der Schweißoptik korrigiert, indem eine Schwenkbewegung der Schweißoptik bzw. des Laserbearbeitungskopfs 1 um den TCP (Tool-Center-Point) durchgeführt wird, an deren Abschluss die beiden Lichtlinien 15a, 15c parallel zueinander ausgerichtet sind, wie in **Fig. 2b** gezeigt ist.

Nachfolgend wird der Arbeitsabstand des Laserbearbeitungskopfs 1 senkrecht zur Oberfläche (in Z-Richtung) des Werkstücks 4 eingestellt, indem der Laserbearbeitungskopf 1 in der Z-Richtung so lange verfahren wird, bis die parallel ausgerichteten Lichtlinien 15a, 15c in X-Richtung mittig in den Messbereichen 17a, 17c liegen. Der Abstand des ersten Messbereichs 17a vom dritten Messbereich 17c wurde hierbei derart gewählt, dass der Abstand in X-Richtung der mittig positionierten Lichtlinien 15a, 15c definitionsgemäß den richtigen Arbeitsabstand (Soll-Abstand) zur Oberfläche des Werkstücks 4 anzeigt. Die Arbeitsabstandseinstellung auf die oben beschriebene Weise ist vor allem beim Schweißen von Radialnähten an rotationssymmetrischen Werkstücken vorteilhaft, da hierbei sichergestellt werden kann, dass der Laserbearbeitungskopf 1 an der Position des Laserstrahls 3 den richtigen Abstand und die korrekte Ausrichtung zum Werkstück 4 aufweist.

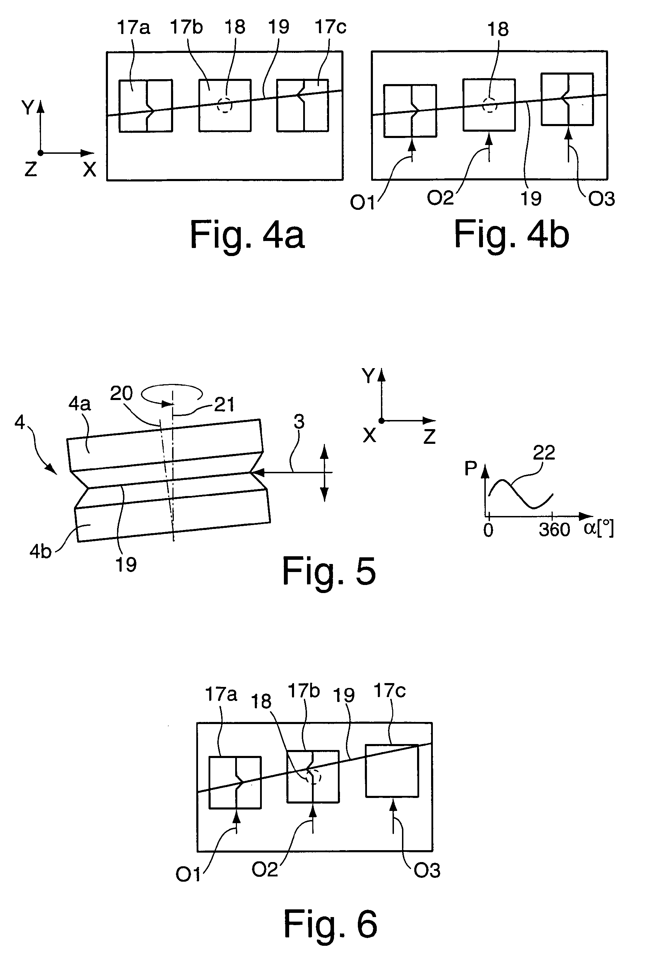

Nach der Ausrichtung und der Einstellung des Arbeitsabstands des Laserbearbeitungskopfs 1 wird die Lage des Laserstrahls 3 geprüft. Hierzu wird mit dem Laserstrahl bei gleicher Leistung wie im späteren Schweißprozess ein Testpunkt auf das Werkstück 4 gesetzt. Die hierbei erzeugte Fokusfläche entspricht der Laserstrahlposition **18,** deren Leuchterscheinung im zweiten Messbereich 17b der Kamera 5a erfasst wird, wie in **Fig. 3a** gezeigt ist. Nachdem die Laserstrahlposition 18 im zweiten Messbereich 17b feststeht, werden alle Messbereiche 17a bis 17c parallel in Y-Richtung so weit auf der Sensorfläche 8 verschoben, bis der Laserstrahl 3 mittig (in Y-Richtung) im zweiten Messbereich 17b liegt, vgl. **Fig. 3b****.** Der hierbei im vorliegenden Fall in Y-Richtung erzeugte Sensor-Offset bzw. -Versatz **O1** bis **O3** für jeden der drei Messbereiche 17a bis 17c liegt beispielsweise bei jeweils 0,050 mm. Der oben beschriebene Kalibrationsschritt zur Einstellung der Laserstrahlposition 18 ist notwendig, um zu verhindern, dass konstant neben der Fügestelle geschweißt wird, deren Winkellage nachfolgend geprüft und eingestellt wird, wie anhand von **Fign. 4a,b** dargestellt ist.

Fig. 4a zeigt eine Fügestelle **19,** die mittig durch den zweiten Messbereich 17b verläuft, so dass deren Position im zweiten Messbereich 17b mit der Laserstrahlposition 18 übereinstimmt. Die mittige Positionierung der Fügestelle 19 kann z.B. dadurch erreicht werden, dass deren Position im zweiten Messbereich 17b mittels des zweiten Lichtlinie 15b erfasst und das Werkstück 4 und der Bearbeitungskopf 1 parallel zueinander verschoben werden, bis die Fügestelle 19 mittig im zweiten Messbereich 17b liegt.

In einem nachfolgenden Schritt wird nun überprüft, ob die Fügestelle 19 im ersten und dritten Messbereich 17a, 17c ebenfalls mittig positioniert ist. Wenn das nicht der Fall ist, kann der Laserbearbeitungskopf 1 um eine senkrecht zum Werkstück 4 verlaufende Drehachse gedreht werden, um die mittige Positionierung zu erreichen. Eine abschließende, hochgenaue Anpassung wird dann durch Verschieben der Messbereiche 17a bis 17c auf der Sensorfläche 8 des Kamera-Chips relativ zueinander und punktsymmetrisch zur Laserstrahlposition bzw. zum Mittelpunkt des zweiten Messbereichs 17b erreicht, da Abweichungen im Bereich einiger 1/100 mm (bis ca. 1/10 mm) einfacher durch Anpassen der Sensorik als durch Positionieren des Laserbearbeitungskopfs 1 zu kompensieren sind. Im vorliegenden Fall wird hierbei der Offset O1 des ersten Messbereichs 17a um 0,025 mm auf 0,025 mm verringert, während der Offset 03 des dritten Messbereichs 17c um 0,025 mm auf 0,075 mm erhöht wird. Hierbei wird letztlich das Sensor-Koordinatensystem an die Geometrie des Werkstücks angepasst.

Die oben beschriebene Winkelausrichtung lässt sich besonders vorteilhaft beim Schweißen einer Radialnaht an einem rotationssymmetrischen Werkstück 4 in Form eines Rohres einsetzen, wie im Folgenden anhand von **Fig. 5** beschrieben wird. Das in Fig. 5 gezeigte Werkstück 4 weist in Richtung seiner Symmetrieachse **20** zwei Werkstückteile **4a, 4b** auf, die entlang der Fügestelle 19 aneinander anliegen. Zum Durchführen des Laserschweißprozesses wird das Werkstück 4 um eine Drehachse **21** gedreht, die in einer ersten, axialen Richtung (Y-Richtung) verläuft. Senkrecht zur axialen Richtung und senkrecht zur Bildebene verläuft eine zweite Richtung (**X-**Richtung), entlang derer die drei Messbereiche 17a bis 17c der Fign. 4a,b verlaufen. Der Laserstrahl 3 verläuft in der Darstellung von Fig. 5 in einer Richtung (Z) in der Bildebene senkrecht zur axialen Richtung (Y).

Wie in Fig. 5 zu erkennen ist, fallen die Drehachse 21 und die Symmetrieachse 20 des rotationssymmetrischen Werkstücks 4 aufgrund von Fehlpositionierungen bei der Einspannung in der Regel nicht zusammen. Bei der Drehung des Werkstücks 4 um die Drehachse 21 führt dieses daher eine Taumelbewegung aus, so dass sich die Lage der Fügestelle 19 sowohl in axialer Richtung Y als auch in lateraler Richtung X verändert. Die hierbei entstehenden Fehlpositionierungen werden durch drei Fehlertypen beschrieben, von denen im Folgenden nur einer, nämlich der Planlauffehler, näher beschrieben wird, der die Abweichung der Fügestelle 19 in axialer Richtung (Y-Richtung) von einer idealen Schweißposition beschreibt.

Der Planlauffehler weist bei einem vollständigen Umlauf des Werkstücks 4 um die Drehachse 21 einen sinusförmigen Verlauf **22** der Position **P** in Y-Richtung in Abhängigkeit vom Drehwinkel α auf, dessen Periodenlänge einem Umlauf (360°) entspricht. Bei der Kalibration kann durch einen Messlauf über eine Werkstückumdrehung (360°) im ersten und dritten Messbereich 17a, 17c die Lage der Fügestelle 19 kontinuierlich erfasst werden und der laterale Versatz (Offset) der Sinusverläufe aus der Messung im ersten Messfenster 17a und der Messung im dritten Messfenster 17c zueinander kann berechnet werden, wobei der jeweilige Sinus-Offset dem Mittelwert des sinusförmigen Verlaufs im jeweiligen Messfenster 17a, 17c entspricht.

Aus diesem Ergebnis werden der erste und dritte Messbereich 17a, 17c entsprechend in zueinander entgegengesetzter Richtung auf der Sensorfläche 8 verschoben, wobei das Ergebnis der Verschiebung aller drei Messbereiche 17a bis 17c (Pre-Offset_äquidistant von 0,050 mm, s.o.) mit einbezogen wird. Es ergibt sich im obigen Beispiel für den ersten Messbereich 17a als erster Offset O1 (Pre-Offset_gesamt) = Pre-Offset_äquidistant + (Pre-Sinusoffset - Post-Sinusoffset) / 2 = 0,025 mm, sowie für den dritten Messbereich 17c als dritter Offset 03 (Post-Offset_gesamt) = Post-Offset_äquidistant - (Pre-Sinusoffset - Post-Sinusoffset) / 2 = 0,075 mm, wobei Pre- bzw. Post-Offset den jeweiligen Offset des ersten Messbereichs 17a (Pre-Messfenster) bzw. des dritten Messbereichs 17c (Post-Messfenster) bezeichnen.

Es versteht sich, dass die oben beschriebene Ausrichtung der Messbereiche 17a bis 17c sich nicht nur bei Fügestellen anwenden lässt, deren Bahn linear durch die drei Messbereiche 17a bis 17c verläuft, sondern auch bei Fügestellen mit anderen Bahnformen, z.B. Kreisausschnitten, wie sie beim Axialschweißen von rotationssymmetrischen Werkstücken auftreten. Bei solchen Axial-Schweißnähten wird eine zweite Lichtlinie 15b im zweiten Messbereich 17b zur automatischen Kalibrierung eingesetzt, da es sich bei einer Bahn in Form eines Kreisausschnitts um eine Bahn handelt, der sich mit drei lateralen Messstellen (Pre, In und Post in Y-Richtung) beschreiben lässt. Die oben beschriebenen Kalibrationsschritte, d.h. die parallele Verschiebung der drei Messbereiche 17a bis 17c sowie deren Verschiebung relativ zueinander werden in diesem Fall analog ausgeführt. Es versteht sich, dass alternativ oder zusätzlich zum Erfassen der Position der Fügestelle 19 mit Hilfe von Lichtlinien diese auch z.B. mittels eines Auflichtverfahrens efasst werden kann.

Insgesamt kann durch das oben beschriebene Kalibrationsverfahren, das vollständig automatisiert durchgeführt werden kann, die exakte Ausrichtung des Laserbearbeitungskopfs 1 zum Werkstück 4 durch Erfassen der Position der Fügestelle 19 in mindestens zwei Messbereichen sowie durch Erfassen der Laserstrahlposition 18 sichergestellt werden. Auch kann eine korrekte Ausrichtung der Messbereiche 17a bis 17c auf der Sensorfläche 8 bezüglich des Laserstrahls 3 sichergestellt werden, so dass die Lage der Schweißnaht in der Fügestelle 19 vom ersten Werkstück an korrekt ist und eine aufwändige Justage der Sensorik anhand von Schliffbildern oder Gravuren entfallen kann. Zudem kann die korrekte Funktion der Sensorik in einer Serienanwendung mit diesem Verfahren nach Ablauf einer definierten Losgröße automatisiert geprüft, dokumentiert sowie ggf. neu feinkalibriert werden.

Weiterhin kann bei einem Schweißprozess, bei dem der Laserbearbeitungskopf 1 an einem in Fig. 1 angedeuteten Roboter-Arm **23** oder einer vergleichbaren Führungseinrichung angebracht ist und von diesem während des Schweißprozesses entlang der Fügestelle bewegt wird, vorteilhafter Weise ein weiterer Kalibrationsschritt zwischen der oben beschriebenen Kalibration des Messsystems und dem eigentlichen Schweißprozess erfolgen.

Beim Schweißen mit Hilfe von Robotern wird üblicherweise in der Robotersteuerung der Verlauf der zu schweißenden Bahn hinterlegt. Dann wird der Laserbearbeitungskopf 1 an bestimmten Stellen des Werkstücks über der Fügestelle, senkrecht dazu und im richtigen Abstand positioniert, und diese Positionen werden ebenfalls in der Robotersteuerung hinterlegt (geteacht), um so den vorgegebenen Bahnverlauf mit dem tatsächlichen Werkstück in Übereinstimmung zu bringen. Während des Schweißprozesses fährt der Roboter die "geteachte" Bahn ab, während die Sensoreinrichtung 5 die genaue Position der Fügestelle 19 erfasst und die Position des Laserbearbeitungskopfs 1 über die Stellachse 11 nachregelt, wie weiter unten näher beschrieben ist.

Die tatsächliche Bahnbewegung des Roboters folgt jedoch z.B. aufgrund von Getriebefehlern der Roboter-Bewegungsachsen nicht absolut der vorgegebenen Bahn, sondern es treten Toleranzen im Bereich einiger 1/100 mm auf. Um diese Fehler auszuregeln, wird nach der Kalibration des Messsystems die zu schweißende Bahn entlang dder Fügestelle 19 einmal vollständig abgefahren und, wie in **Fig. 6** gezeigt, die Position der Fügestelle 19 im ersten Messbereich 17a über den ersten Lichtschnitt 15a erfasst und die Stellachse 11 des Laserbearbeitungskopfs 1 entsprechend der gemessenen Position vorlaufverzögert nachgeregelt. Im zweiten Messbereich 17b wird über den zweiten Lichtschnitt 15b an der tatsächlichen späteren Schweißstelle die Position der Fügestelle 19 überprüft. Die dabei ermittelten Abweichungen von der Sollposition der Fügestelle 19 mittig im Messbereich 17b werden gespeichert und dienen beim anschließenden Schweißprozess zur Kompensation des durch den Roboter verursachten Bahnfehlers. Dies ist möglich, da der Roboter oder ggf. eine andere Führungs- bzw. Bewegungseinrichtung beim Wiederholen der Bewegung immer die gleichen Abweichungen von der "geteachten" Bahn aufweist.

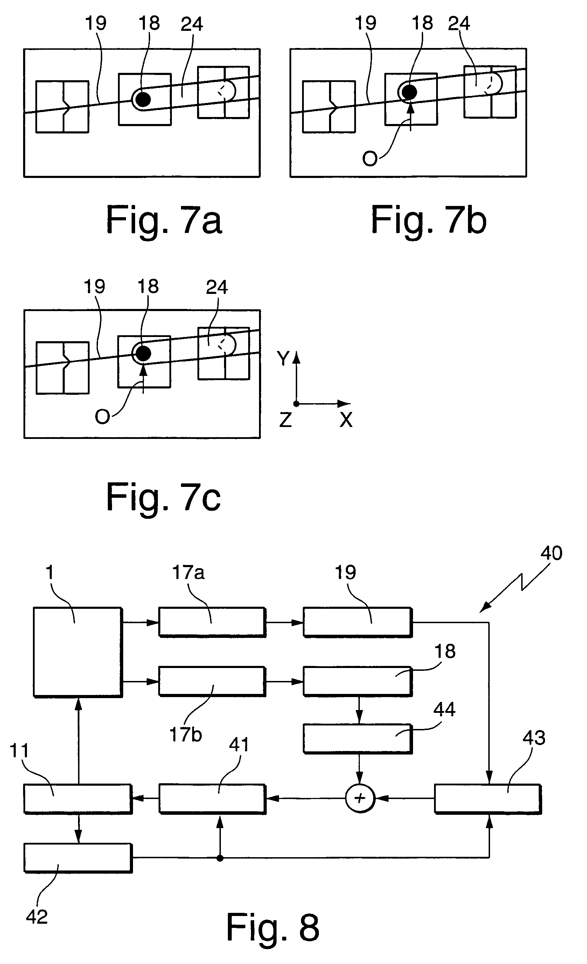

Bei der Durchführung des nachfolgenden Laserschweißprozesses, die in **Fign. 7a** bis **7c** gezeigt ist, wird der Laserstrahl 3 mit einer hohen Leistung betrieben und in einer Schweißrichtung (negative X-Richtung) relativ zum Werkstück 4 bewegt, wobei an der Laserstrahlposition 18 ein Laserstrahlfokus gebildet wird, der einen Schweißpunkt auf dem Werkstück 4 erzeugt, hinter dem sich eine Schweißnaht **24** ausbildet. Im Folgenden werden wegen der Positionierung des Laserstrahlfokus an der Laserstrahlposition 18 während des Schweißens beide Begriffe synonym verwendet.

Es versteht sich, dass bei einer Relativbewegung zwischen Werkstück 4 und Laserbearbeitungskopf 1 entweder das Werkstück 4 ortsfest bleiben kann, wobei der Laserbearbeitungskopf 1 in Schweißrichtung verschoben wird, wie dies beim Roboterschweißen der Fall ist, oder der Laserbearbeitungskopf 1 ortsfest bleiben und entsprechend das Werkstück 4 entlang der Schweißrichtung bewegt werden kann, wie dies z.B. beim Schweißen von Radialnähten (vgl. Fig. 5) typischer Weise der Fall ist. Selbstverständlich kann auch ggf. eine überlagerte Bewegung von Laserbearbeitungskopf 1 und Werkstück 4 erfolgen.

In jedem Fall wird während der Relativbewegung die tatsächliche Laserstrahlposition 18 in der Optik bzw. auf der Oberfläche des Werkstücks 4 während des Laserschweißens kontinuierlich im zweiten Messbereich 17b erfasst und ausgewertet. Diese zusätzliche Messgröße wird dem herkömmlichen Regelkreis der Nahtlageregelung, der weiter unten im Einzelnen beschrieben ist, überlagert. Dazu wird on-line während des Schweißens die aktuell im zweiten Messbereich 17b erfasste Laserstrahlposition 18 mit der zuvor im ersten Messbereich 17a erfassten, in der Steuerung gespeicherten Lage der Fügestelle 19 verglichen. Führt der Laserstrahl 3 keine Driftbewegung aus, befindet sich die Laserstrahlposition 18 stets mittig im zweiten Messbereich 17b, wie in Fig. 7a gezeigt ist. Ändert sich die Laserstrahlposition 18 im zweiten Messbereich 17b z.B. aufgrund von temperaturinduzierten Driftbewegungen, so weist die Laserstrahlposition 18 einen Offset **O** auf, die Laserstrahlposition 18 in Y-Richtung weicht von der Position der Fügestelle 19 in dieser Richtung ab und die Schweißnaht 24 ist bezüglich der Fügestelle 19 versetzt, was zu einem Schweißfehler führt (vgl Fig. 7b).

Wird hingegen eine Kompensation der Driftbewegungen des Laserstrahls 3 in der Bearbeitungsoptik vorgenommen, indem eine Abweichung der Laserstrahlposition 18 von der mittigen Einstellung festgestellt wird, so kann die Position des Laserbearbeitungskopfs 1 über die Korrekturachse 11 nachgeregelt werden, so dass wie in Fig. 7c gezeigt die Position der Fügestelle 19 relativ zur Laserstahlposition 18 verschoben wird, wodurch die Fügestelle 19 und die Schweißnaht 24 wieder entlang einer gemeinsamen Linie verlaufen, so dass eine korrekte Schweißung sichergestellt werden kann.

Es versteht sich, dass neben der möglichst genauen Positionierung der Laserfokusfläche in der Mitte der Fügestelle ebenfalls eine Positionierung mit einem vorgegebenen konstanten Versatz des Laserstrahls zur Fügestelle ausgeführt werden kann, wenn das für die Bearbeitung erforderlich ist. In diesem Fall wird bei der hochgenauen Nahtlageregelung unter Berücksichtigung der Nahtlageerkennung im ersten Messbereich und der Driftkompensation des Laserstrahls im zweiten Messbereich ein weiteres Versatzmaß auf das Ergebnis der Bahnplanung bzw. des erweiterten Positionsregelkreises hinzuaddiert.

Im Folgenden wird anhand von **Fig. 8** ein vereinfachtes Diagramm eines Regelkreises **40** für die oben beschriebene erweiterte Nahtlageregelung mit Driftkompensation der Laserfokusfläche beschrieben. Der Regelkreis 40 verfügt über einen Regler **41** zur Regelung der Korrekturachse 11 von Fig. 1, welche ausgelegt ist, den Laserbearbeitungskopf 1 in Y-Richtung zu bewegen, um Fehlschweißungen zu vermeiden. Mittels eines Messsystems **42** mit Inkrement-Geber wird die Ist-Position der Korrekturachse 11 ermittelt und einer Bahnplanungseinheit **43** zugeführt, welche aus der Ist-Position eine Soll-Position der Korrekturachse 11 berechnet und diese an den Regler 41 übermittelt, der anhand der Abweichung der Soll-Position von der ermittelten Ist-Position die Position der Korrekturachse 11 regelt.

Der Bahnplanungseinheit 43 wird von der Laserschweißoptik des Laserbearbeitungskopfs 1, in welche die Sensoreinrichtung 5 integriert ist, die im ersten Messbereich 17a erfasste Position der Fügestelle 19 in lateraler Richtung (Y-Richtung) zugeführt, um diese Position bei der Berechnung des Soll-Werts für die Korrekturachse 11 zu berücksichtigen. Die im zweiten Messbereich 17b gemessene, laterale Laserstrahlposition 18 (entsprechend der Laserfokusfläche), die anhand einer Bildauswertung erfasst wurde, wird zunächst einem Filter **44** zugeführt und die gefilterten Werte werden der Soll-Position der Korrekturachse 11 des Regelkreises 40 überlagert. Dadurch werden laterale Driftbewegungen des Laserstrahls automatisch ausgeregelt. Ebenso wird ein systemtechnisch bedingter Versatz des Laserstahls in der Optik, beispielsweise durch einen Wechsel der Lichtleitfaser am Schweißkopf, automatisch kompensiert.

Insgesamt wird auf die oben beschriebene Weise das Laserschweißen mit hochgenauer Nahtlageregelung auf die zu schweißende Fügestelle unter Kompensation von Driftbewegungen des Laserstrahls in der Bearbeitungsoptik ermöglicht, wobei auch Bahnfehler, die bei der Bewegung des Laserbearbeitungskopfs entlang des Werkstücks ggf. auftreten, ausgeglichen werden können.

## Patentansprüche

1. Verfahren zum Vorbereiten eines Laserschweißprozesses an einem Werkstück (4), umfassend die Schritte:
Erfassen der Position einer Fügestelle (19) an dem Werkstück (4) mit Hilfe einer Sensoreinrichtung (5) in einem ersten Messbereich (17a) vorlaufend zu einer Laserstrahlposition (18),
Erfassen der Position der Fügestelle (19) mit der Sensoreinrichtung (5) in einem zweiten Messbereich (17b) an der Laserstrahlposition (18) und/oder in einem dritten Messbereich (17c) nachlaufend zur Laserstrahlposition (18),
Erfassen der Laserstrahlposition (18) in dem zweiten Messbereich (17b) mit der Sensoreinrichtung (5),
sowie
Vergleichen der Positionen der Fügestelle (19) in den jeweiligen Messbereichen (17a bis 17c) und der Laserstrahlposition (18) zum Anpassen der Lage, der Ausrichtung und/oder des Koordinatensystems der Sensoreinrichtung (5) und/oder eines Laserbearbeitungskopfs (1) relativ zum Werkstück (4),
**dadurch gekennzeichnet daß**
zum Erfassen der Laserstrahlposition (18) mit dem Laserstrahl (3) ein Testpunkt auf dem Werkstück (4) erzeugt wird und das Koordinatensystem der Sensoreinrichtung (5) an die so erfasste Laserstrahlposition (18) angepasst wird, bis die Laserstrahlposition (18) sich an einer Sollposition befindet.

2. Verfahren nach Anspruch 1, bei dem während des Erfassens der Position der Fügestelle (19) der Laserbearbeitungskopf (1) und das Werkstück (4) relativ zueinander entlang der Fügestelle (19) bewegt werden.

3. Verfahren nach einem der vorhergehenden Ansprüche, bei dem die Position der Fügestelle (19) im jeweiligen Messbereich (17a bis 17c) mit Hilfe von Messlicht, insbesondere durch ein Lichtschnitt-Verfahren mit mindestens einer Lichtlinie (15a bis 15c), erfasst wird.

4. Verfahren nach Anspruch 3, bei dem in einem vorausgehenden Verfahrensschritt die Ausrichtung des Laserbearbeitungskopfs (1) zum Werkstück (4) anhand der Ausrichtung der Lichtlinien (15a, 15c) in den Messbereichen (17a, 17c) ermittelt und bevorzugt eine parallele Ausrichtung der Lichtlinien (15a, 15c) in den Messbereichen (17a, 17c) eingestellt wird.

5. Verfahren nach Anspruch 3 oder 4, bei dem in dem vorausgehenden Verfahrensschritt der Abstand des Laserbearbeitungskopfs (1) vom Werkstück (4) anhand der Position von zwei parallel ausgerichteten Lichtlinien (15a, 15c) in den Messbereichen (17a, 17c) bestimmt und bevorzugt auf einen Soll-Abstand eingestellt wird.

6. Verfahren nach einem der vorhergehenden Ansprüche, bei dem das Koordinatensystem der Sensoreinrichtung (5) an die erfasste Laserstrahlposition (18) angepasst wird, indem die Sensoreinrichtung (5) oder die Messbereiche (17a bis 17c) verschoben werden, bis die Laserstrahlposition (18) sich an der Sollposition, insbesondere mittig im zweiten Messbereich (17b), befindet.

7. Verfahren nach einem der vorhergehenden Ansprüche, bei dem das Koordinatensystem der Sensoreinrichtung (5) an den Verlauf der Fügestelle (19) angepasst wird, indem die Messbereiche (17a bis 17c) relativ zueinander, bevorzugt punktsymmetrisch zur Laserstrahlposition (18), verschoben werden, bis die Fügestelle (19) mittig in den jeweiligen Messbereichen (17a bis 17c) positioniert ist.

8. Verfahren zum Durchführen eines Laserschweißprozesses an einem Werkstück (4), umfassend die Schritte:
Erfassen der Position einer Fügestelle (19) in einem ersten Messbereich (17a) vorlaufend zu einer Laserstrahlposition (18),
Erfassen der Laserstrahlposition (18) in einem zweiten Messbereich (17b),
Bestimmen einer optimalen Schweißposition durch Überlagerung der Messwerte der Laserstrahlposition (18) und der Position der Fügestelle (19), und
Bewegen eines Laserbearbeitungskopfs (1) an die optimale Schweißposition,
**dadurch gekennzeichnet,**
**dass** zur Vorbereitung des Laserschweißprozesses ein Verfahren nach einem der Ansprüche 1 bis 7 ausgeführt wird.

9. Verfahren nach Anspruch 8, bei dem der Laserbearbeitungskopf (1) während des Laserschweißprozesses mittels einer Führungseinrichtung, insbesondere eines Roboterarms (23), entlang der Fügestelle (19) bewegt wird, und bei dem eine während der Vorbereitung des Laserschweißprozesses ermittelte Abweichung der Position der Fügestelle (19) im zweiten Messbereich (17b) von einer Sollposition zur Kompensation eines Bahnfehlers der Führungseinrichtung beim Bestimmen der optimalen Schweißposition berücksichtigt wird.

## Claims

1. Method for preparing a laser welding process on a workpiece (4), comprising the steps:
detecting the position of a joint site (19) on the workpiece (4) using a sensor device (5) in a first measurement zone (17a) in front of a laser beam position (18),
detecting the position of the joint site (19) with the sensor device (5) in a second measurement zone (17b) at the laser beam position (18) and/or in a third measurement zone (17c) after the laser beam position (18),
detecting the laser beam position (18) in the second measurement zone (17b) with the sensor device (5), and
comparing the positions of the joint site (19) in the respective measurement zones (17a to 17c) and the laser beam position (18) for adaptation of the position, alignment and/or coordinate system of the sensor device (5) and/or a laser machining head (1) relative to the workpiece (4),
**characterized in that** to detect the laser beam position (18), with the laser beam (3) a test point is generated on the workpiece (4) and the coordinate system of the sensor device (5) is adapted to the laser beam position (18) detected in this way until the laser beam position (18) is at a nominal position.

2. Method according to claim 1, in which during detection of the position of the joint site (19), the laser machining head (1) and the workpiece (4) are moved relative to each other along the joint site (19).

3. Method according to any of the preceding claims, in which the position of the joint site (19) in the respective measurement zone (17a to 17c) is detected using measurement light, in particular a light section method with at least one light line (15a to 15c).

4. Method according to claim 3, in which in a preceding process step the alignment of the laser machining head (1) to the workpiece (4) is determined from the alignment of the light lines (15a, 15c) in the measurement zones (17a, 17c) and preferably a parallel alignment of light lines (15a, 15c) is set in the measurement zones (17a, 17c).

5. Method according to claim 3 or 4, in which in the preceding process step the distance of the laser machining head (1) from the workpiece (4) is determined from the position of two parallel aligned light lines (15a, 15c) in the measurement zones (17a, 17c) and preferably set to a nominal distance.

6. Method according to any of the preceding claims, in which the coordinate system of the sensor device (5) is adapted to the detected laser beam position (18) in that the sensor device (5) or the measurement zones (17a to 17c) are shifted until the laser beam position (18) is at the nominal position, in particular centrally in the second measurement zone (17b).

7. Method according to any of the preceding claims, in which the coordinate system of the sensor device (5) is adapted to the course of the joint site (19), in that the measurement zones (17a, 17c) are moved relative to each other, preferably point symmetrically to the laser beam position (18), until the joint site (19) is positioned centrally in the respective measurement zones (17a to 17c).

8. Method for performing a laser welding process on a workpiece (4) comprising the steps:
detecting the position of a joint site (19) in a first measurement zone (17a) in front of a laser beam position (18),
detecting the laser beam position (18) in a second measurement zone (17b), determining an optimum weld position by superimposing the measurement values of the laser beam position (18) and the position of the joint site (19), and
moving a laser machining head (1) to the optimum weld position,
**characterised in that**
in preparation for the laser welding process, a method according to any of claims 1 to 7 is performed.

9. Method according to claim 8, in which the laser machining head (1) is moved along the joint site (19) during the laser welding process by means of a guide device, in particular a robot arm (23), and in which a deviation, determined during preparation for the laser welding process, of the position of the joint site (19) in the second measurement zone (17b) from a nominal position is taken into account to compensate for a track error of the guide device when determining the optimum weld position.

## Revendications

1. Procédé de préparation d'un processus de soudage au laser sur une pièce (4) à usiner, incluant les étapes consistant :
à détecter l'emplacement d'une zone de jonction (19) sur ladite pièce (4) à usiner, à l'aide d'un dispositif détecteur (5), dans une première zone de mesure (17a) précédant un emplacement (18) d'un rayon laser,
à détecter l'emplacement de ladite zone de jonction (19) à l'aide dudit dispositif détecteur (5), dans une deuxième zone de mesure (17b) située à l'emplacement (18) du rayon laser et/ou dans une troisième zone de mesure (17c) succédant audit emplacement (18) du rayon laser,
à détecter ledit emplacement (18) du rayon laser dans ladite deuxième zone de mesure (17b), à l'aide dudit dispositif détecteur (5),
ainsi qu'à
comparer ledit emplacement (18) du rayon laser et les emplacements de ladite zone de jonction (19) dans les zones de mesure (17a à 17c) respectives, en vue d'adapter la position, l'orientation et/ou le système de coordonnées dudit dispositif détecteur (5) et/ou d'une tête (1) d'usinage au laser, par rapport à ladite pièce (4) à usiner,
**caractérisé par le fait que**,
pour détecter l'emplacement (18) du rayon laser, un point de test est effectué par ledit rayon laser (3) sur la pièce (4) à usiner, et le système de coordonnées du dispositif détecteur (5) est adapté à l'emplacement (18) du rayon laser ainsi détecté, jusqu'à ce que ledit emplacement (18) du rayon laser se trouve en un emplacement de consigne.

2. Procédé selon la revendication 1, dans lequel la tête (1) d'usinage au laser et la pièce (4) à usiner sont animées de mouvements relatifs, le long de la zone de jonction (19), au cours de la détection de l'emplacement de ladite zone de jonction (19).

3. Procédé selon l'une des revendications précédentes, dans lequel l'emplacement de la zone de jonction (19) est détecté, dans la zone de mesure (17a à 17c) considérée, au moyen d'une lumière de mesure et notamment par un procédé de coupe lumineuse comportant au moins une ligne de lumière (15a à 15c).

4. Procédé selon la revendication 3, dans lequel, au cours d'une étape opératoire précédente, l'orientation de la tête (1) d'usinage au laser, par rapport à la pièce (4) à usiner, est définie sur la base de l'orientation des lignes de lumière (15a, 15c) dans les zones de mesure (17a, 17c), et une orientation parallèle desdites lignes de lumière (15a, 15c) est de préférence réglée dans lesdites zones de mesure (17a, 17c).

5. Procédé selon la revendication 3 ou 4, dans lequel, au cours de l'étape opératoire précédente, la distance séparant la tête (1) d'usinage au laser d'avec la pièce (4) à usiner est déterminée sur la base de l'emplacement de deux lignes de lumière (15a, 15c) orientées parallèlement, dans les zones de mesure (17a, 17c), et est de préférence réglée sur une distance de consigne.

6. Procédé selon l'une des revendications précédentes, dans lequel le système de coordonnées du dispositif détecteur (5) est adapté à l'emplacement détecté (18) du rayon laser en déplaçant ledit dispositif détecteur (5), ou les zones de mesure (17a à 17c), jusqu'à ce que ledit emplacement (18) du rayon laser se trouve à l'emplacement de consigne, en particulier au centre de la deuxième zone de mesure (17b).

7. Procédé selon l'une des revendications précédentes, dans lequel le système de coordonnées du dispositif détecteur (5) est adapté au tracé de la zone de jonction (19) en déplaçant les zones de mesure (17a à 17c) les unes par rapport aux autres, de préférence avec symétrie ponctuelle vis-à-vis de l'emplacement (18) du rayon laser, jusqu'à ce que ladite zone de jonction (19) soit positionnée centralement dans les zones de mesure (17a à 17c) respectives.

8. Procédé d'exécution d'un processus de soudage au laser sur une pièce (4) à usiner, incluant les étapes consistant à :
détecter l'emplacement d'une zone de jonction (19) dans une première zone de mesure (17a) précédant un emplacement (18) d'un rayon laser,
détecter ledit emplacement (18) du rayon laser dans une deuxième zone de mesure (17b), déterminer un emplacement optimal de soudage par superposition des valeurs mesurées dudit emplacement (18) du rayon laser et dudit emplacement de la zone de jonction (19), et
mouvoir une tête (1) d'usinage au laser audit emplacement optimal de soudage,
**caractérisé par le fait**
**qu'**un procédé conforme à l'une des revendications 1 à 7 est mis en oeuvre pour préparer le processus de soudage au laser.

9. Procédé selon la revendication 8, dans lequel la tête (1) d'usinage au laser est mue le long de la zone de jonction (19) au cours du processus de soudage au laser, au moyen d'un dispositif de guidage et notamment d'un bras de robot (23) ; et dans lequel un écart entre un emplacement de consigne et l'emplacement de ladite zone de jonction (19) dans la deuxième zone de mesure (17b), défini au cours de la préparation dudit processus de soudage au laser, est pris en compte pour la compensation d'une erreur de trajectoire dudit dispositif de guidage lors de la détermination de l'emplacement optimal de soudage.
